# EUROPÄISCHE PATENTANMELDUNG

(11) **EP 0 595 062 A1**
(43) Veröffentlichungstag der Anmeldung: **04.05.1994**
(21) Anmeldenummer: 93115944.6
(22) Anmeldetag: 02.10.1993
(51) Int. Cl.: E06B 3/54, E04F 13/14, F16B 13/12

(54) **Glasbauelement für die rahmenlose Schraubbefestigung an einer Trägerkonstruktion**

(30) Priorität: 28.10.1992 DE 9214581 U
(71) Anmelder: SAINT-GOBAIN VITRAGE INTERNATIONAL S.A., F-92400 Courbevoie (FR); VEGLA Vereinigte Glaswerke GmbH, D-52066 Aachen (DE)
(72) Erfinder: Vornholt, Hans, NL-6471 Eygelshoven (NL)
(74) Vertreter: Biermann, Wilhelm, Dr.-Ing.

(57) **Zusammenfassung**

Ein Glasbauelement für die rahmenlose Befestigung an einer Trägerkonstruktion besteht aus einer Verbundglasscheibe, die wenigstens zwei über eine thermoplastische Zwischenschicht (3) miteinander verbundene Einzelglasscheiben umfaßt. Die der Trägerkonstruktion zugewandte Einzelglasscheibe ist auf ihrer freien Oberfläche mit hinterschnittenen Sacklochbohrungen (5) versehen. Diese Sacklochbohrungen (5) dienen zur Aufnahme von Schraubverbindungselementen, die aus in Achsrichtung geschlitzten metallischen Spreizhülsen (10) mit Innengewinde (20) bestehen.

## Beschreibung

Die Erfindung betrifft ein Glasbauelement für die rahmenlose Schraubbefestigung an einer Trägerkonstruktion, aus einer wenigstens zwei Einzelglasscheiben umfassenden Verbundglasscheibe, von denen die der Trägerkonstruktion zugewandte Einzelglasscheibe vorzugsweise im Randbereich mit Bohrungen versehen ist, in denen jeweils ein mit einem Gewinde versehenes metallisches Schraubverbindungselement angeordnet ist.

Glasbauelemente dieser Art sind in verschiedenen Ausführungen bekannt. Bei einer bekannten Ausführungsform (EP 0 277 535 B1) sind in der der Trägerkonstruktion zugewandten Einzelglasscheibe durchgehende Bohrungen angebracht, die derart hinterschnitten sind, daß die Hinterschneidung einen kegelstumpfförmigen Querschnitt nach Art einer Senkbohrung aufweist. In diesen Senkbohrungen ist jeweils unter Zwischenschaltung einer Buchse aus Kunststoff eine Senkkopfschraube eingesetzt, wobei die Oberfläche des Kopfes der Senkkopfschraube bündig mit der Oberfläche der entsprechenden Glasscheibe verläuft, die auf dieser Seite über eine thermoplastische Polymerfolie mit der zweiten Einzelglasscheibe verbunden ist. Nachteilig bei dieser Ausführungsform ist es, daß die Senkkopfschrauben vor der Herstellung der Verbundglasscheibe in den Senkbohrungen der Glasscheibe angeordnet werden müssen, deren Schaft auf der anderen Seite aus der Glasscheibe herausragt und den Herstellungsprozeß der Verbundglasscheibe behindert.

Bei einem anderen bekannten Glasbauelement der eingangs genannten Art besteht das metallische Schraubverbindungselement aus einem hohlzylindrischen Teil mit Innengewinde, das unter Zwischenschaltung einer Kunststoffhülse in die durchgehende Bohrung eingesetzt wird und mit einem scheibenförmigen Halteteil versehen ist, das sich auf der Oberfläche der Glasscheibe im Umgebungsbereich der Bohrung abstützt (EP 0340 089 B1). Das Schraubverbindungselement steht in diesem Fall nicht über die freie Oberfläche der Verbundglasscheibe vor, doch ragt der scheibenförmige Halteteil in die thermoplastische Zwischenschicht der Verbundglasscheibe hinein, die deshalb eine verhältnismäßig große Dicke aufweisen muß. Wenn beispielsweise für die Herstellung einer normalen Verbundglasscheibe eine einzelne handelsübliche Folie aus Polyvinylbutyral verwendet wird, sind bei diesem bekannten Glasbauelement drei solche Folien erforderlich, von denen die mittlere mit Ausschnitten versehen werden muß, die dem Durchmesser des scheibenförmigen Halteteils entsprechen. Diese Maßnahmen sind mit einem erhöhten Kosten- und Arbeitsaufwand verbunden.

Der Erfindung liegt die Aufgabe zugrunde, ein Glasbauelement der eingangs genannten Art bereitzustellen, das die genannten Nachteile nicht aufweist, das heißt das einerseits zumindest während des Herstellungsverfahrens der Verbundglasscheibe keine über die Scheibenoberfläche hinausragenden Teile von Schraubbefestigungselementen aufweist, und das andererseits mit einer verhältnismäßig dünnen thermoplastischen Zwischenschicht herstellbar ist.

Gemäß der Erfindung zeichnet sich das Glasbauelement dadurch aus, daß die Bohrungen in der der Trägerkonstruktion zugewandten Einzelglasscheibe auf der freien Oberfläche der Verbundglasscheibe angebrachte hinterschnittene Sacklochbohrungen, und die Schraubverbindungselemente in Achsrichtung geschlitzte metallische Spreizhülsen mit Innengewinde sind.

Die formschlüssige Verankerung in hinterschnittenen Bohrlöchern mit Hilfe von spreizdübelartigen Elementen ist auch für die Befestigung von einzelnen Glasscheiben grundsätzlich bekannt. Es war jedoch nicht zu erwarten, daß sich diese Befestigungsart auch für die Befestigung von Glasbauelementen aus Verbundglas eignet, die einerseits ein verhältnismäßig hohes Gewicht aufweisen, und deren Befestigung ein hohes Maß an Sicherheit erfordert, weil solche Glasbauelemente häufig als Fassadenelemente eingesetzt werden und daher eine besonders gute Verankerung der Glasbauelemente erforderlich ist. Andererseits steht für diese Befestigungsart nicht die Dicke der gesamten Verbundglasscheibe zur Verfügung, sondern nur ein Teil der Dicke der der Trägerkonstruktion zugewandten Einzelglasscheibe, die üblicherweise nur 8 bis 10 mm beträgt, so daß ein Sackloch nur eine Tiefe von etwa 6 bis 8 mm aufweisen kann. Schließlich ist es bisher nicht üblich, metallische Befestigungsmittel unmittelbar auf die Glasoberfläche einwirken zu lassen, vielmehr werden bisher zwischen ein metallisches Befestigungselement und die Glasoberfläche immer Zwischenelemente aus elastischen Materialien zwischengeschaltet, wie es auch bei den oben genannten bekannten Glasbauelementen der Fall ist. Überraschenderweise hat es sich gezeigt, daß die neuerungsgemäße Anwendung der an sich bekannten Befestigungsart auf schwere Glasbauelemente allen Sicherheitsanforderungen genügt.

Darüber hinaus besteht ein wesentlicher Vorteil gegenüber den bekannten Glasbauelementen darin, daß nicht nur die äußere Einzelglasscheibe, sondern auch die an der thermoplastischen Zwischenschicht der Verbundglasscheibe anliegende Oberfläche der der Trägerkonstruktion zugewandten Einzelglasscheibe keinerlei Unterbrechungen, Erhebungen oder Diskontinuitäten aufweist, so daß sie in idealer Weise mit der äußeren Glasscheibe über eine verhältnismäßig dünne thermoplastische Zwischenschicht verbunden werden kann. Im Gegensatz zu den bekannten Glasbauelementen ist es unter Umständen sogar möglich, die Sacklochbohrungen nach Fertigstellung der Verbundglasscheibe anzubringen. Schließlich können auch die Spreizhülsen selbst zu einem beliebigen Zeitpunkt in den Sackbohrungen befestigt werden, beispielsweise erst unmittelbar vor der Montage der Glasbauelemente, so daß die metallischen Spreizhülsen auch für den Fall, daß sie geringfügig über die Oberfläche der Verbundglasscheibe überstehen, beim Versand, beim Transport und beim Handling der Glasbauelemente nicht stören.

Anhand der Zeichnungen wird die Erfindung näher beschrieben.

Von den Zeichnungen zeigt,
- Fig. 1: das neue Glasbauelement in einer Schnittdarstellung;
- Fig. 2: eine neuerungsgemäß verwendete Spreizhülse in perspektivischer Ansicht, und
- Fig. 3: das neue Glasbauelement im montierten Zustand.

Das neue Glasbauelement besteht in seiner einfachsten Ausführungsform aus zwei Silikatglasscheiben, nämlich einer der Trägerkonstruktion zugewandten Glasscheibe 1 und einer äußeren Glasscheibe 2, die durch eine thermoplastische Zwischenschicht 3 miteinander verbunden sind. Die der Trägerkonstruktion zugewandte Glasscheibe 1 kann, je nach den an das Glasbauelement gestellten Anforderungen, aus thermisch vorgespanntem Glas oder aus normal gekühltem Glas bestehen. Die Dicke dieser Glasscheibe 1 beträgt beispielsweise 8 bis 10 mm. Die äußere Glasscheibe 2 besteht in der Regel aus nicht vorgespanntem, das heißt normal gekühltem Glas, und ihre Dicke beträgt beispielsweise 6 mm. Sie kann jedoch ebenfalls aus thermisch vorgespanntem Glas bestehen. Die thermoplastische Zwischenschicht 3 besteht üblicherweise aus Polyvinylbutyral. Die Dicke dieser Zwischenschicht 3 beträgt bei kleineren Scheibenformaten und bei Verwendung von nicht vorgespannten Glasscheiben 0,76 mm, bei größeren Scheibenformaten und bei Verwendung einer vorgespannten Glasscheibe 1 hingegen etwa 1,5 mm. In der Praxis werden in diesem Fall zwei Polyvinylbutyralfolien von je 0,76 mm aufeinandergelegt.

Die Glasscheibe 1 ist auf ihrer freien Oberfläche im Bereich ihrer vier Ecken jeweils mit einer Sacklochbohrung 5 versehen. Die Sacklochbohrung 5 weist einen hohlzylindrischen Abschnitt 6 und einen hinterschnittenen Abschnitt 7 auf. Der Durchmesser und die Tiefe der Sacklochbohrung richten sich nach der Dicke der Glasscheibe 1. Bei einer Dicke der Glasscheibe 1 von 8 mm beträgt beispielsweise die Tiefe der Sacklochbohrung etwa 5 mm. Der Durchmesser des hohlzylindrischen Abschnitts 6 beträgt in diesem Fall 7 mm, und der Durchmesser des hinterschnittenen Abschnitts 7 am Boden der Sacklochbohrung beträgt 9 mm. Falls für die Glasscheibe 1 eine 10 mm dicke Glasscheibe verwendet wird, beträgt die Tiefe der Sackbohrung 5 insgesamt etwa 7 mm, wobei die Durchmesser des hohlzylindrischen Abschnitts 6 und des hinterschnittenen Abschnitts 7 wiederum 7 bzw. 9 mm betragen.

Das Anbringen der hinterschnittenen Sacklochbohrungen 5 erfolgt mit Hilfe einer auf dem Markt erhältlichen Spezial-Bohreinrichtung, mit der sich diese Sacklochbohrungen mit großer Genauigkeit herstellen lassen.

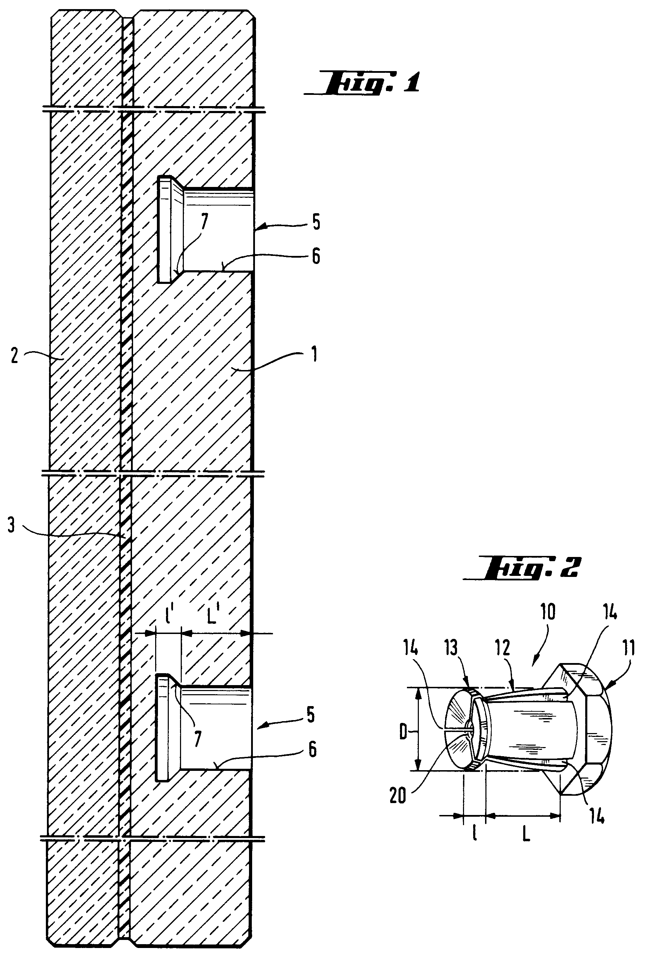

In diese Sacklochbohrungen 5 werden mit einem Innengewinde 20 versehene Spreizhülsen 10 eingesetzt, wie sie in Fig. 2 dargestellt sind. Diese Spreizhülsen 10 weisen einen beispielsweise mit einem Sechskant versehenen Kopf 11, einen konisch zulaufenden Schaft 12 und einen Endabschnitt 13 auf, der mit einer radial vorspringenden ringförmigen Verdickung versehen ist. Der Durchmesser D dieses Endabschnitts 13 entspricht dem Durchmesser des hohlzylindrischen Abschnitts 6 der Zugehörigen Sacklochbohrung, so daß die Spreizhülse in die Sacklochbohrung eingeführt werden kann. Ebenso entsprechen die Länge L des Schaftes 12 und die Länge 1 des Endabschnitts 13 den entsprechenden Abmessungen L' bzw. l' der Sacklochbohrungen 5. Der Schaft 12 und der Endabschnitt 13 der Spreizhülse 10 weisen mehrere Längsschlitze 14 auf. Die Spreizhülsen 10 sind mit einem Innengewinde 20, beispielsweise dem Gewinde M5, versehen, wobei die Gewindebohrung in dem dargestellten ungespreizten Zustand zum Endabschnitt 13 hin sich konisch verjüngt.

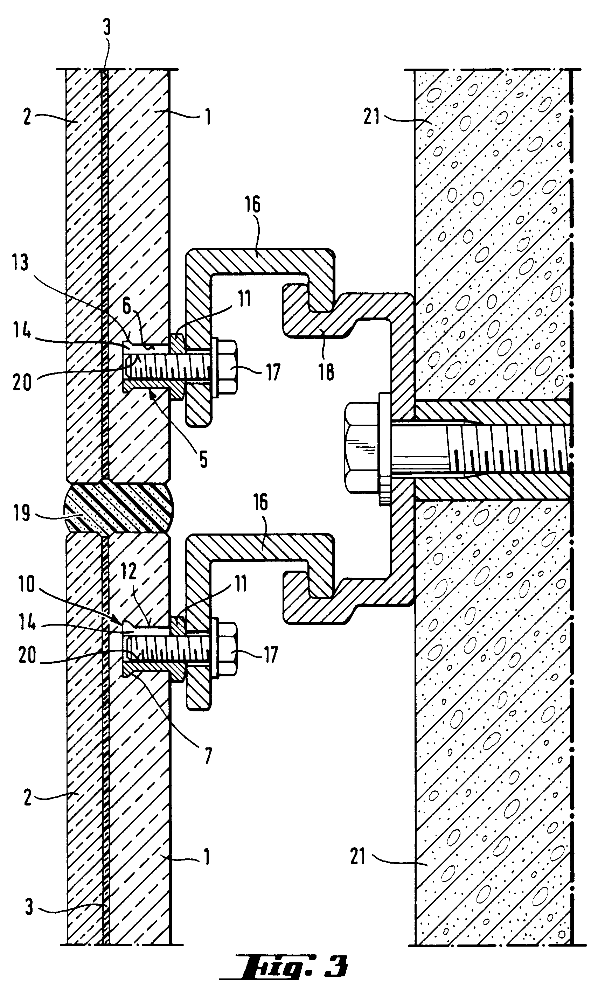

Die Spreizhülsen 10 werden zweckmäßigerweise erst bei der Montage der Glasbauelemente an der Baustelle in die Sacklochbohrungen eingesetzt. Beispielsweise werden, wie es in Fig. 3 dargestellt ist, auf den Glasbauelementen im Querschnitt hakenförmige Profilleisten 16 mit Hilfe der Gewindeschrauben 17 befestigt, indem jeweils eine Spreizhülse 10 in eine Sacklochbohrung 5 eingeführt und die Gewindeschrauben 17 in das Gewinde 20 der Spreizhülsen 10 eingeschraubt werden. Zweckmäßigerweise wird zum Eindrehen der Schrauben 17 ein Drehmoment-Schraubschlüssel verwendet, um die auf die Lochleibung ausgeübten Kräfte auf ein für das Glas unschädliches Maß zu bechränken. Die so mit den Profilleisten 16 versehenen Glasbauelemente werden in entsprechende Tragprofile 18 eingehängt, die am Baukörper 21 befestigt sind. Die zwischen den Glasbauelementen verbleibenden Fugen werden mit einem dauerelastischen Dichtstoff 19 ausgefüllt.

## Patentansprüche

1. Glasbauelement für die rahmenlose Schraubbefestigung an einer Trägerkonstruktion, aus einer wenigstens zwei Einzelglasscheiben umfassenden Verbundglasscheibe, von denen die der Trägerkonstruktion zugewandte Einzelglasscheibe vorzugsweise im Randbereich mit Bohrungen versehen ist, in denen jeweils ein mit einem Gewinde versehenes metallisches Schraubverbindungselement angeordnet ist,
**dadurch gekennzeichnet,** daß die Bohrungen auf der freien Oberfläche der Verbundglasscheibe angebrachte hinterschnittene Sacklochbohrungen (5), und die Schraubverbindungselemente in Achsrichtung geschlitzte metallische Spreizhülsen (10) mit Innengewinde (20) sind.

2. Glasbauelement nach Anspruch 1, dadurch gekennzeichnet, daß die Sacklochbohrungen (5) im hinteren Abschnitt (6) eine zylindrische Lochleibung und in dem dem Lochboden benachbarten vorderen Abschnitt (7) eine kegelige Hinterschneidung aufweisen.

3. Glasbauelement nach Anspruch 1 oder 2, dadurch gekennzeichnet, daß die Spreizhülsen (10) im vorderen Endabschnitt (13) mit einem die Hinterschneidung (7) der Sacklochbohrung (5) hintergreifenden aufgedickten Endabschnitt (13) versehen sind.

4. Glasbauelement nach einem der Ansprüche 1 bis 3, dadurch gekennzeichnet, daß die metallischen Spreizhülsen (10) ohne Zwischenschaltung von Kunststoffbuchsen oder -hülsen formschlüssig in den Sacklochbohrungen (5) verankert sind.

5. Glasbauelement nach einem der Ansprüche 1 bis 4, dadurch gekennzeichnet, daß die der Trägerkonstruktion zugewandte und mit den Sacklochbohrungen (5) versehene Glasscheibe (1) aus vorgespanntem Glas besteht.

6. Glasbauelement nach einem der Ansprüche 1 bis 5, dadurch gekennzeichnet, daß die der Trägerkonstruktion abgewandte Glasscheibe (2) aus gekühltem, das heißt nicht vorgespanntem Glas besteht.
